# EUROPEAN PATENT SPECIFICATION

(11) **EP 3 505 664 B1**
(45) Date of publication and mention of the grant of the patent: **20.01.2021**
(21) Application number: 18210940.5
(22) Date of filing: 07.12.2018
(51) Int. Cl.: D03D 47/30, D03D 49/62, D03D 51/12

(54) **METHOD OF DETERMINING AMPLITUDE OF REED VIBRATION FOR AIR JET LOOM**
VERFAHREN ZUR BESTIMMUNG DER AMPLITUDE DER RIETSCHWINGUNG FÜR EINE LUFTDÜSENWEBMASCHINE
PROCÉDÉ DE DÉTERMINATION DE L'AMPLITUDE DE VIBRATION À LAMES POUR MÉTIER À TISSER À JET D'AIR

(30) Priority: 28.12.2017 JP 2017254022
(43) Date of publication of application: 03.07.2019
(73) Proprietor: Kabushiki Kaisha Toyota Jidoshokki, Kariya-shi, Aichi 448-8671 (JP)
(72) Inventor: YAGI, Daisuke, Kariya-shi Aichi 448-8671 (JP)
(74) Representative: TBK

(56) References cited:
- JP-A- 2001 003 241
- JP-A- 2001 040 553
- JP-A- 2016 098 462

## Description

### BACKGROUND ART

The present disclosure relates to a method of determining amplitude of reed vibration that is vibration of a reed for an air jet loom.

Japanese Patent Application Publication No. 2001-3241 discloses a method and a device for determining abnormality in an apparatus for detecting a weft yarn with respect to a method of determining amplitude of reed vibration for an air jet loom. In the method for determining abnormality in the apparatus for detecting a weft yarn, abnormal vibration of dents of the reed is determined by comparing a signal from a weft yarn feeler, corresponding to the amount of incident light during a period when no weft yarn is present in a weft passage, with a threshold value. The abnormal vibration of dents of the reed is determined, so that erroneous detection, in which the apparatus mistakenly determines that a weft yarn is being inserted during a period when no weft yarn is present in a weft passage due to the abnormal vibration of dents of the reed, is prevented.

One of causes that cause reed vibration in which dents of the reed vibrate in the width direction of the base of the air jet loom is the rotation of the spindle in the air jet loom. The amplitude of the reed vibration depends on the rotational speed of the spindle. As the rotational speed of the spindle increases, the amplitude of the reed vibration becomes large. That is, as the rotational speed of the spindle decreases, the amplitude of the reed vibration becomes small. However, as the rotational speed of the spindle becomes small, the weaving efficiency of the air jet loom decreases. On the other hand, when the rotational speed of the spindle increases and the amplitude of the reed vibration becomes large within the weaving width, the quality of warp yarns in the woven fabric is adversely affected. Therefore, determining the amplitude of the reed vibration within the weaving width is important for improving the quality of warp yarns.

In the apparatus for detecting a weft yarn in the above-described Publication, since the head of a weft yarn feeler is disposed at the right end of the slay that is located outside the weaving width, the amplitude of the reed vibration is determined at a position that is located outside the weaving width and where warp yarns are not passed. That is, in the method for detecting a weft yarn in the above-described Publication, though the amplitude of the reed vibration that is located outside the weaving width can be determined for preventing erroneous detection, the amplitude of the reed vibration that is located within the weaving width through which warp yarns are passed cannot be determined.

Since warp yarns are not passed outside the weaving width, the amplitude of the reed vibration that is located outside the weaving width is greater than the amplitude of the reed vibration that is located within the weaving width. Accordingly, when the rotational speed of the spindle decreases based on the amplitude of the reed vibration that is located outside the weaving width and that is detected by the head of the feeler, the weaving efficiency of the air jet loom may decrease excessively. In order to increase the accuracy of the detection in the amplitude of the reed vibration, a vibration damping member may be provided in the dents of the reed that are located outside the weaving width and near the head of the feeler. In the case, the amplitude of the reed vibration that is located outside the weaving width becomes smaller than the amplitude of the reed vibration that is located within the weaving width. As a result, when the rotational speed of the spindle increases based on the amplitude of the reed vibration that is located outside the weaving width and that is detected by the head of the feeler, the amplitude of the reed vibration that is located within the weaving width may become a value in which the quality of warp yarns is adversely affected.

The present disclosure, which has been made in view of the above problems, is directed to providing a method of determining amplitude of reed vibration for an air jet loom, which is located within a weaving width and that adversely affects quality of warp yarns.

### SUMMARY

In accordance with an aspect of the present disclosure, there is provided a method of determining amplitude of reed vibration for an air jet loom. The air jet loom determines the amplitude of the reed vibration that is vibration of a reed of the air jet loom based on detected signals detected by a sensor for determining the amplitude of the reed vibration. The method is characterized by disposing the sensor for determining the amplitude of the reed vibration within a weaving width in a direction of weft insertion, wherein the sensor for determining the amplitude of the reed vibration is a reflection optical sensor that is insertable into a shed between warp yarns and retractable from the shed between the warp yarns and determining the amplitude of the reed vibration within the weaving width based on amplitude of a signal waveform contained in the detected signal detected during a period when no weft yarn is present in a weft passage among the detected signals detected by the sensor for determining the amplitude of the reed vibration.

Other aspects and advantages of the disclosure will become apparent from the following description, taken in conjunction with the accompanying drawings, illustrating by way of example the principles of the disclosure.

### BRIEF DESCRIPTION OF THE DRAWINGS

The disclosure together with objects and advantages thereof, may best be understood by reference to the following description of the embodiments together with the accompanying drawings in which:
FIG. 1 is a schematic plan view of an air jet loom according to a first embodiment of the present disclosure;
FIG. 2 is a partially enlarged side view of a reed and a weft yarn sensor when a weft yarn is beaten by the reed in the air jet loom of FIG. 1;
FIG. 3 is a chart showing a detected signal by the weft yarn sensor and an enlarged waveform contained in the detected signal during a period when no weft yarn is present in a weft passage in the air jet loom of FIG. 1; and
FIG. 4 is a chart showing a detected signal by the weft yarn sensor and an enlarged waveform contained in the detected signal during a period when no weft yarn is present in the weft passage in an air jet loom according to a second embodiment of the present disclosure.

### DETAILED DESCRIPTION OF THE EMBODIMENTS

### First embodiment

The following will describe an air jet loom according a first embodiment of the present disclosure and a method of determining amplitude of reed vibration that is vibration of a reed of the air jet loom with reference to the drawings. First, the following will describe the function of the air jet loom.

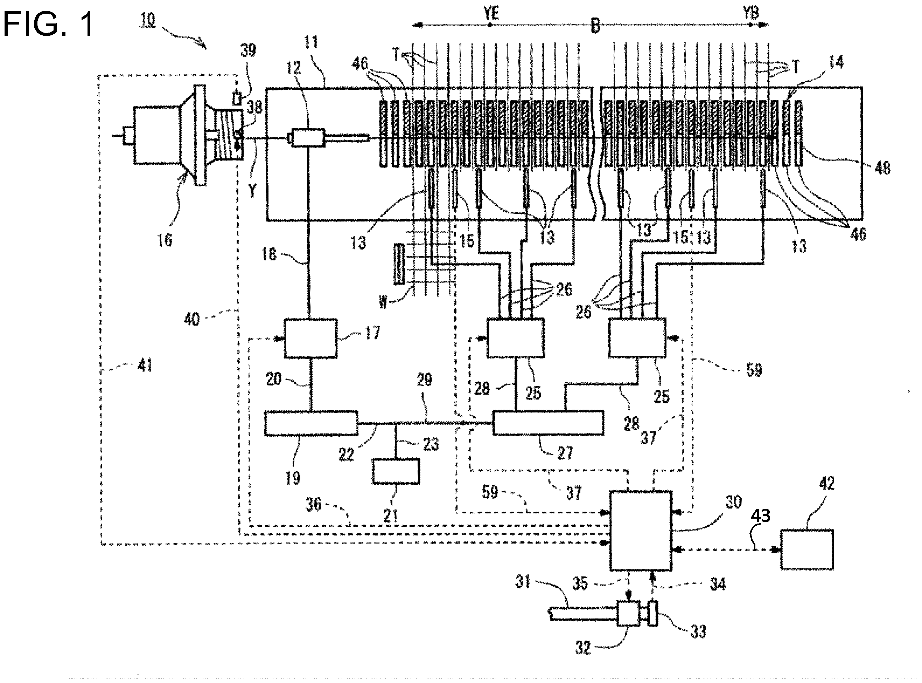

Referring to FIG. 1, an air jet loom 10 includes a slay 11 extending in the width direction of the base of the air jet loom 10. A main nozzle 12 for weft insertion, sub nozzles 13 for weft insertion, a reed 14, and a plurality of weft yarn sensors 15 as a sensor for determining the amplitude of reed vibration are fixed on the slay 11. A weft yarn measuring and storing device 16 is disposed upstream of the main nozzle 12.

The main nozzle 12 is provided at the end of the slay 11 on the side of the weft yarn measuring and storing device 16. The main nozzle 12 is connected to a main opening and closing valve 17 through a pipe 18. The main opening and closing valve 17 is connected to a main air tank 19 through a pipe 20. The main air tank 19 is connected to an air supply source 21 for supplying compressed air through a pipe 22 and a common pipe 23. Although not shown in the drawing, a brake means is provided for braking a weft yarn Y before the weft insertion ends in the air jet loom 10. The brake means is a mechanical type or an air type.

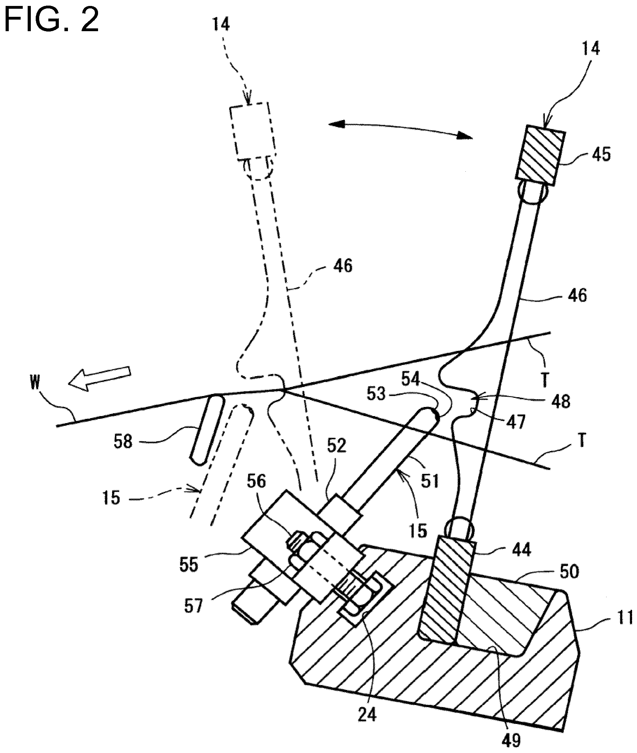

As shown in FIG. 1, the plurality of sub nozzles 13 are spaced at regular intervals in the direction of the weft insertion on the slay 11. In the present embodiment, though the number of the sub nozzles 13 is 24, for the sake of explanation convenience, only the eight sub nozzles 13 are shown in the FIG. 1. Referring to FIG. 2, a support groove 24 is formed in the front side of the slay 11 for mounting the plurality of sub nozzles 13. The support groove 24 is formed along the longitudinal direction of the slay 11 and has a longitudinal cross-section that is T-shaped. The plurality of the sub nozzles 13 are fixed to the slay 11 via support blocks (not shown in the drawing) in such a manner that the position of each sub nozzle 13 is adjustable. When the slay 11 swings, each sub nozzle 13 is insertable into a shed between the warp yarns T through two adjacent warp yarns T and retractable from the shed between the warp yarns T.

The sub nozzles 13 are connected to sub opening and closing valves 25 through pipes 26. In the present embodiment, the four pipes 26 connected to the four sub nozzles 13, respectively, are connected to the single sub opening and closing valve 25. Although the two sub opening and closing valves 25 are shown in FIG. 1, in the present embodiment, the six sub opening and closing valves 25 are arranged side by side in the direction of the weft insertion. The sub opening and closing valves 25 are connected to a sub air tank 27 through pipes 28. The sub air tank 27 is connected to the air supply source 21 for supplying compressed air through a pipe 29 and the common pipe 23.

As shown in FIG. 1, the air jet loom 10 includes a controller 30 for controlling parts of the air jet loom 10. The controller 30 is connected to an encoder 33 that is provided in a drive motor 32 for rotating a spindle 31 of the air jet loom 10 through a signal line 34. The rotational angle of the spindle 31 is detected based on signals from the encoder 33. The drive motor 32 is connected to the controller 30 through a signal line 35. The controller 30 controls a start and stop operation of the drive motor 32. The controller 30 includes a calculating processing section and a memory section that are not shown in the drawing.

The controller 30 is connected to the main opening and closing valve 17 through a signal line 36 and connected to the sub opening and closing valve 25 through a signal line 37. The main opening and closing valve 17 and the sub opening and closing valve 25 open and close at a predetermined timing based on signals from the controller 30. Compressed air in the main air tank 19 and the sub air tank 27 is supplied to the main nozzle 12 and the sub nozzle 13 for weft insertion.

As shown in FIG. 1, the weft yarn measuring and storing device 16 is provided upstream of the main nozzle 12 and mounted to a stand (not shown in the drawing) disposed adjacent to the base of the air jet loom 10. The weft yarn measuring and storing device 16 includes a weft yarn stop pin 38 and a balloon sensor 39. The weft yarn stop pin 38 is operated by electromagnetic force. The balloon sensor 39 detects the weft yarn Y that is released from the weft yarn measuring and storing device 16 during weft insertion.

The weft yarn stop pin 38 of the weft yarn measuring and storing device 16 is connected to the controller 30 through a signal line 40. The balloon sensor 39 is connected to the controller 30 through a signal line 41. While the air jet loom 10 operates, the controller 30 generates a command signal based on a predetermined timing and a detected signal detected by the balloon sensor 39 so that the weft yarn stop pin 38 performs engagement and release of the weft yarn Y.

As shown in FIG. 1, the air jet loom 10 includes a display device 42. In the present embodiment, the display device 42 serves as a function panel that can input numerical values as well as a display panel displaying various types of information. The display device 42 displays the amplitude of the reed vibration of the air jet loom 10 and a warning when the reed vibration is abnormal as described later. The display device 42 is connected to the controller 30 through a signal line 43.

The following will describe the function of the reed 14. As shown in FIG. 1, the reed 14 is formed by a plurality of dents 46 that are arranged side by side in the direction of weft insertion on the slay 11. As shown in FIG. 2, the reed 14 includes a lower support frame 44, a upper support frame 45, end dents (not shown in the drawing) located at the right and left ends of the lower support frame 44 and the upper support frame 45, and the plurality of dents 46 that have a flat plate shape. The plurality of the dents 46 are held by the lower support frame 44 and the upper support frame 45. Each dent 46 has therein a recess 47 facing forward. As shown in FIG. 1, since the plurality of dents 46 are arranged side by side in the direction of weft insertion, the recesses 47 of the plurality of dents 46 form a weft passage 48 through which a weft yarn Y flies. Although each warp yarn T passes between the two adjacent dents 46, no warp yarn T passes between the two adjacent dents 46 that are disposed adjacent to the both ends of the lower support frame 44 and the upper support frame 45. Many warp yarns T each passing between the two adjacent dents 46 form a warp row.

As shown in FIG. 2, a mount groove 49 is formed on the upper side of the slay 11 to fix the reed 14. The mount groove 49 is formed in the longitudinal direction of the slay 11. The lower support frame 44 is inserted in the mount groove 49 and fixed to the slay 11 by a wedge part 50.

In the present embodiment, the plurality of weft yarn sensors 15 are fixed to the slay 11. The weft yarn sensors 15 detect a weft yarn Y that flies through the weft passage 48. One of the weft yarn sensors 15 is disposed at a position adjacent to the main nozzle 12 from the center of a weaving width B. Specifically, as shown in FIG. 1, the weft yarn sensor 15 is disposed at an intermediate position between the first sub nozzle 13 disposed closest to the main nozzle 12 and the second sub nozzle 13 disposed downstream of the first sub nozzle 13 in the direction of the weft insertion.

Another weft yarn sensor 15 is disposed at an intermediate position between the 23rd sub nozzle 13 upstream of and next to the 24th sub nozzle 13 disposed furthest from the main nozzle 12 in the direction of the weft insertion and the 22nd sub nozzle 13 upstream of and next to the 23th sub nozzle 13. The weft yarn sensor 15 provided between the 22nd sub nozzle 13 and the 23rd sub nozzle 13 is disposed within the weaving width B in the weft insertion direction between the leading end position YE that the leading end of the weft yarn Y reaches after the air injection ends and the leading end position YB that the leading end of the weft yarn Y reaches at a brake timing. When the slay 11 swings, each of the weft yarn sensors 15 is insertable into the shed between the warp yarns T through two adjacent warp yarns T of the warp row and retractable from the shed between the warp yarns T.

As shown in FIG. 2, the weft yarn sensor 15 includes a sensor body 51 and a holder 52 holding the sensor body 51. The sensor body 51 has a light projecting part 53 and a light receiving part 54 on the distal end thereof. That is, the weft yarn sensor 15 is a reflection optical sensor that is insertable into the shed between the warp yarns and retractable from the shed between the warp yarns. The light projecting part 53 is, for example, formed by an optical fiber. One end of the optical fiber of the light projecting part 53 faces outside from the distal end of the sensor body 51. The other end of the optical fiber of the light projecting part 53 is connected to a light projecting element (not shown in the drawing).

The light receiving part 54 is disposed adjacent to the light projecting part 53 and formed by an optical fiber as well as the light projecting part 53. One end of the optical fiber of the light receiving part 54 faces outside from the distal end of the sensor body 51. The other end of the optical fiber of the light receiving part 54 is connected to a light receiving element (not shown in the drawing). The weft yarn sensor 15 includes a detecting circuit (not shown in the drawing) for generating a detected signal based on a voltage corresponding to the amount of light detected by the light receiving element. Accordingly, the weft passage 48 has two light projecting regions where the two weft yarn sensors 15 project light, respectively.

As shown in FIG. 2, the holder 52 of the weft yarn sensor 15 is held by a bracket 55. The bracket 55 is fixed to the slay 11 by fastening a bolt 56 fitted in the support groove 24 of the slay 11 with a nut 57. The position of the light projecting part 53 and the light receiving part 54 is adjustable by adjusting the holding position of the holder 52 in the bracket 55. The weft yarn sensor 15 is movable in the longitudinal direction of the slay 11 by loosening the engagement of the nut 57. That is, the position of the weft yarn sensor 15 is adjustable in the longitudinal direction of the slay 11.

The weft yarn sensor 15 is fixed to the slay 11 in such a manner to be inclined to the reed 14. The light projecting part 53 and the light receiving part 54 direct to the weft passage 48 of the weft yarn Y. The air jet loom 10 includes a fell plate 58 guiding a woven fabric W in the front direction of the reed 14.

The weft yarn sensor 15 is connected to the controller 30 through a signal line 59. The light received by the light receiving part 54 of the weft yarn sensor 15 is converted to an electric signal. The detecting circuit of the weft yarn sensor 15 detects the electric signal having the voltage level corresponding to the amount of the light received by the light receiving part 54. The detected signal is transmitted to the controller 30.

The following will describe a method of determining the amplitude of the reed vibration in the air jet loom 10. During the operation of the air jet loom 10, when the slay 11 moves to the position for weft beating, as shown in FIG.2, the weft yarn sensor 15 indicated by the chain double-dashed line is located below the woven fabric W and the light projecting part 53 and the light receiving part 54 direct to the woven fabric W.

When the slay 11 moves rearward of the air jet loom 10 for weft insertion, the weft yarn sensor 15 is located below the warp yarns T of the warp row that is opening and the light projecting part 53 and the light receiving part 54 direct to the warp yarns T of the warp row.

As shown in FIG. 2, the slay 11 moves rearward, so that the weft yarn sensor 15 indicated by the solid line is inserted in the shed between the warp yarns T through the lower warp yarns T of the warp row. When the weft yarn sensor 15 is inserted in the shed between the warp yarns T, the light projecting part 53 and the light receiving part 54 direct to the position where a weft yarn Y flies. After the weft insertion ends, the slay 11 swings forward of the air jet loom 10 for the weft beating operation, so that the weft yarn sensor 15 returns to the position indicated by the chain double-dashed line.

As shown in FIG. 2, while the air jet loom 10 operates, the weft yarn sensor 15 moves repeatedly between the position below the woven fabric W and the warp yarns T of the warp row and the position in the shed between the warp yarns T. Accordingly, the light projecting part 53 and the light receiving part 54 have the period when directing to the woven fabric W and the warp yarns T of the warp row and the period when directing to the weft passage 48 of the weft yarn Y in the reed 14. The periods are repeated alternately. The weft yarn sensor 15 detects the woven fabric W and the warp yarn T or the weft yarn Y repeatedly.

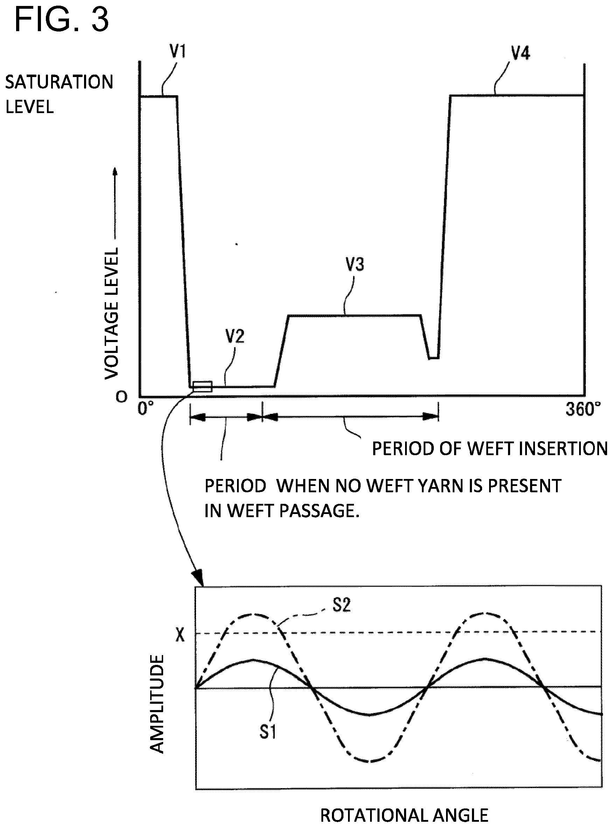

FIG. 3 is a chart showing a detected signal detected by the weft yarn sensor 15 while the air jet loom 10 operates. The horizontal axis in the graph of FIG. 3 shows the rotational angle (from zero degree to 360 degrees) of the spindle 31. The vertical axis in the graph of FIG. 3 shows the voltage level of the detected signal detected by the weft yarn sensor 15. Since the light emitting element of the weft yarn sensor 15 constantly emits light by command of the controller 30, the light projecting part 53 of the weft yarn sensor 15 constantly projects light. In the weft yarn sensor 15, the light receiving element converts the reflected light received by the light receiving part 54 to an electric signal and then, the detecting circuit detects the detected signals V1, V2, V3, and V4 having the voltage levels corresponding to the amount of light received by the light receiving part 54. The detected signals V1 through V4 detected by the detecting circuit are transmitted to the controller 30.

As shown in FIG. 3, the detected signal V1 is a detected signal of the voltage level corresponding to the amount of light received by the light receiving part 54 during the period of the weft beating after the weft insertion ends. In the period of the weft beating after the weft insertion ends, the light projecting part 53 and the light receiving part 54 are located adjacent to the woven fabric W and the warp yarns T. When light projected by the light projecting part 53 reflects on the woven fabric W and the warp yarns T, the effective reflection surface that reflects the light projected by the light projecting part 53 is large. Thus, the amount of light received by the light receiving part 54 increases, so that the voltage of the detected signal V1 reaches the saturation voltage level. Accordingly, the controller 30 can determine that the detected signal V1 that reaches the saturation voltage level is a detected signal generated by the light reflected on the woven fabric W and the warp yarns T of the warp row.

As shown in FIG. 3, the detected signal V2 is a detected signal of the voltage level corresponding to the amount of light received by the light receiving part 54 at the timing when the weft yarn sensor 15 is inserted in the shed between the warp yarns T through the lower warp yarns T of the warp yarns T, after the weft beating ends. After the weft beating ends, the timing when the weft yarn sensor 15 is inserted into the shed between the warp yarns T through the lower warp yarns T of the warp yarns T is a timing before the weft insertion begins. Then, no weft yarn Y is present in the weft passage 48 and the light receiving part 54 receives the light reflected on the wall surface of the recesses 47 of the dents 46 in the light projecting region of the weft passage 48 of the reed 14. The distance between the light receiving part 54 and the wall surface of the weft passage 48 is larger than that from the light receiving part 54 to the woven fabric W, that from the light receiving part 54 to the warp yarn T, and that from the light receiving part 54 to the weft yarn Y that locates during weft insertion, which is described later. A clearance is present between the two adjacent dents 46 of the reed 14. Accordingly, the amount of light received by the light receiving part 54 is small. The detected voltage level becomes the voltage level of the detected signal V2 that is extremely smaller than that of the detected signal V1. The detected signal V2 corresponds to the detected signal during the period when no weft yarn Y is present in the weft passage 48.

When the weft yarn sensor 15 is inserted into the shed between the warp yarns T, the light receiving part 54 receives light reflected on the wall surface of the weft passage 48 instead of light reflected on the warp yarns T of the warp row. Thus, the voltage level of the detected signal corresponding to the amount of the light received by the light receiving part 54 decreases at least to the voltage level of the detected signal V2 that is extremely smaller than the saturation voltage level of the detected signal V1. When the controller 30 detects the detected signal V2, the controller 30 determines that the decrease of the voltage level from the saturation voltage level of the detected signal V1 ends.

During the weft insertion, the weft yarn sensor 15 directs to the weft passage 48 of the reed 14. When a weft yarn Y passes in the weft passage 48, part of the light projected from the light projecting part 53 reflects on the weft yarn Y in the light projecting region of the weft passage 48 of the reed 14 and then, the light receiving part 54 receives the part of the light. The distance from the light projecting part 53 to the weft yarn Y and the distance from the light receiving part 54 to the weft yarn Y are smaller than that from the light projecting part 53 to the wall surface of the weft passage 48 and that from the light receiving part 54 to the wall surface of the weft passage 48, respectively. The weft yarn Y travels continuously in the direction of the weft insertion. Thus, the voltage level of the detected signal V3 during the weft insertion is greater than the detected signal V2. Accordingly, the controller 30 determines that when the detected signal V1 that has the saturation voltage level decreases at least to the detected signal V2 and then the detected signal V2 changes to the detected signal V3, the detected signal V3 is the detected signal generated during the period when the weft yarn Y is detected. In using a dark-colored weft yarn that absorbs light, the detected signal V3 may be smaller than the detected signal V2. In the case, the controller 30 also determines that when the detected signal V1 that has the saturation voltage level decreases at least to the detected signal V2 and then the detected signal V2 changes to the detected signal V3, the detected signal V3 is the detected signal generated during the period when the weft yarn Y is detected.

The weft yarn sensor 15 directs to the weft yarn Y and receives the light reflected on the weft yarn Y in the light projecting region of the weft passage 48 of the reed 14 until the weft insertion ends. When the weft insertion ends and then, the slay 11 swings in the direction for weft beating, the weft yarn sensor 15 is retracted outside the shed between the warp yarns T and located below the warp yarns T of the warp row. When the weft yarn sensor 15 is retracted outside the shed between the warp yarns T, the light receiving part 54 receives strong light reflected on the warp yarns T of the warp row. As a result, the voltage level increases and then the detected signal V4 reaches the saturation voltage level. The detected signal V4 is the signal that connects to the detected signal V1 after the period of the weft beating.

In the present embodiment, the weft yarn sensor 15 detects a weft yarn Y, so that the controller 30 determines the timing when the weft yarn Y reaches the position where the weft yarn sensor 15 is provided, based on the rotational angle of the air jet loom 10 and then stores the detected data of the weft yarn. The detected data stored in the controller 30, which is the timings when the weft yarn Y reaches the position where the weft yarn sensor 15 is provided, can be used as the data for controlling weft insertion, such as injection timings and periods of the main nozzle 12 and the sub nozzle 13.

Reed vibration occurs when the dents 46 vibrate in the width direction of the base of the air jet loom 10. In a case in which the reed vibration depends on the rotational speed of the spindle 31, as the rotational speed of the spindle 31 increases, the amplitude of the reed vibration increases. As the rotational speed of the spindle 31 decreases, the amplitude of the reed vibration decreases. In the present embodiment, the controller 30 determines the amplitude of the reed vibration within the weaving width B and depending on the rotational speed of the spindle 31 based on the amplitude of the detected signal V2 detected during the period when no weft yarn Y is present in the weft passage 48, among the detected signals detected by the weft yarn sensor 15.

As shown in FIG. 3, when part of the detected signal V2 during the period when no weft yarn Y is present in the weft passage 48 is enlarged, the waveform of the detected signal V2 is formed by a sine wave due to the reed vibration within the weaving width B. When the amplitude of the detected signal V2 is smaller than or equal to a predetermined threshold value X, the quality of warp yarns in the woven fabric W is not adversely affected. When the amplitude of the detected signal V2 is greater than the threshold value X, the quality of warp yarns is adversely affected. The threshold value X depends on weaving conditions and is obtained by experiences including test operations of the air jet loom 10 and is previously stored in the controller 30. The threshold value X is variable via the display device 42. The controller 30 compares the maximum amplitude of the detected signal V2 with the threshold value X.

As shown in FIG. 3, in the signal waveform S1 having the amplitude that is smaller than or equal to the threshold value X, the controller 30 determines that the amplitude of the reed vibration does not adversely affect the quality of the warp yarns of the woven fabric W. In the case, the rotational speed of the spindle 31 increases up to the threshold value X, so that the weaving efficiency can be improved. An operator of the air jet loom 10 may adjust so that the rotational speed of the spindle 31 increases. The amplitude of the reed vibration determined by the controller 30 is displayed on the display device 42. When the amplitude of the reed vibration is displayed, for example, deviation rate of the amplitude relative to the threshold value X may be displayed.

As shown in FIG. 3, in the signal waveform S2 having the amplitude that is greater than the threshold value X, the controller 30 determines that the amplitude of the reed vibration adversely affects the quality of the warp yarns of the woven fabric W. In the case, the controller 30 controls the display device 42 to display a warning for showing the abnormality of the reed vibration and sound an alarm. When an operator recognizes the warning or the alarm, the operator may adjust to decrease the rotational speed of the spindle 31 so that the amplitude of the signal waveform S2 in the detected signal V2 becomes smaller than or equal to the threshold value X.

In the air jet loom 10 according to the present embodiment, the method of determining the amplitude of the reed vibration in the air jet loom 10 offers the following advantageous effects.
(1) The controller 30 determines the amplitude of the reed vibration within the weaving width B that depends on the rotational speed of the spindle 31 based on the amplitude of the signal waveform S1 (S2) contained in the detected signal V2 detected during the period when no weft yarn Y is present in the weft passage 48 among the detected signals V1 through V4 detected by the weft yarn sensor 15. That is, the controller 30 can determine the amplitude of the reed vibration within the weaving width B that adversely affects the quality of warp yarns of the woven fabric W. As a result, the weaving efficiency does not decreases more than necessary and the quality of warp yarns of the woven fabric W can improve.
(2) The sensor for determining the amplitude of the reed vibration is the weft yarn sensor 15 for detecting the weft yarn Y flying through the weft passage 48. Since the weft yarn sensor 15 serves also as the sensor for determining the amplitude of the reed vibration, the apparatus for determining the amplitude of the reed vibration and detecting the weft yarn Y can be simplified.
(3) The controller 30 controls the display device 42 to display the amplitude of the reed vibration determined within the weaving width B based on the amplitude of the signal waveform S1 (S2) in the detected signal V2 during the period when no weft yarn Y is present in the weft passage 48. Thus, an operator of the air jet loom 10 can easily adjust the amplitude of the reed vibration within the weaving width B by adjusting the rotational speed of the spindle 31.
(4) The controller 30 performs a warning operation when the amplitude of the reed vibration determined within the weaving width B based on the amplitude of the signal waveform S1 (S2) in the detected signal V2 during the period when no weft yarn Y is present in the weft passage 48 surpasses the predetermined threshold value X. Thus, an operator of the air jet loom 10 can monitor the amplitude of the reed vibration within the weaving width B during the weaving operation, so that the quality of the warp yarns of the woven fabric W can be prevented from being decreased.
(5) The controller 30 can determine the difference between the threshold value X and the amplitude of the reed vibration within the weaving width B determined based on the amplitude of the signal waveform S1 (S2) in the detected signal V2 during the period when no weft yarn Y is present in the weft passage 48. For example, in the test operation of the air jet loom 10, the controller 30 can adjust the rotational speed of the spindle 31 so that the amplitude of the signal waveform S1 coincides with the threshold value X. As a result, the condition that does not adversely affect the quality of the warp yarns of the woven fabric W can be determined, so that the maximum weaving efficiency can be obtained.

### Second embodiment

The following will describe a method of determining the amplitude of the reed vibration for an air jet loom according a second embodiment of the present disclosure. The second embodiment differs from the first embodiment in determining the amplitude of the reed vibration that does not depend on the rotational speed of the spindle. The air jet loom according to the second embodiment is similar to that of the first embodiment and therefore, common or similar elements or parts are designated by the same reference numerals as those used in the first embodiment.

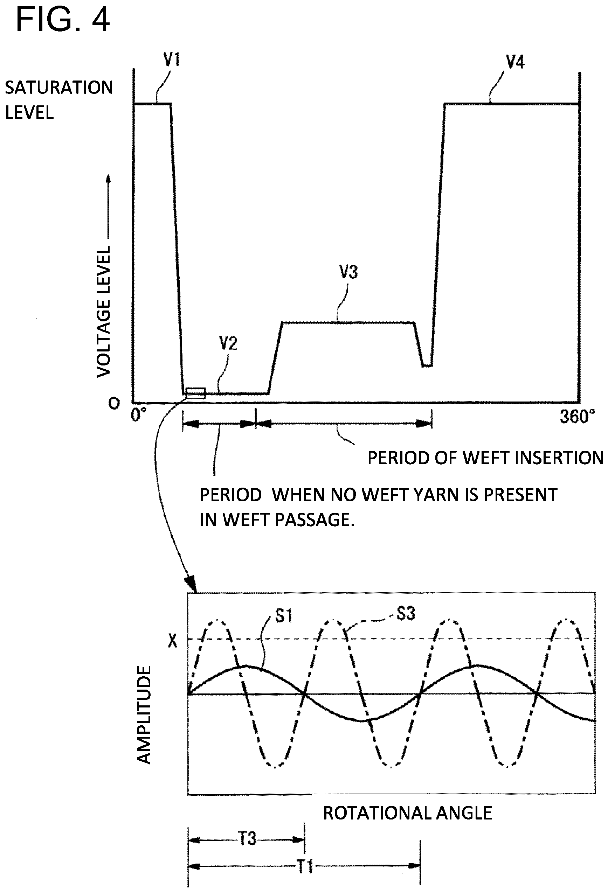

In the present embodiment, the controller 30 determines the amplitude of the reed vibration within the weaving width B based on the amplitude of the detected signal V2 and the cycle of the signal waveform contained in the detected signal V2 detected during the period when no weft yarn Y is present in the weft passage 48, among the detected signals detected by the weft yarn sensor 15. Specifically, the controller 30 monitors the amplitude and the cycle of the signal waveform contained in the detected signal V2 during the period when no weft yarn Y is present in the weft passage 48 by the two weft yarn sensors 15. Referring to FIG. 4, the signal waveform S1 is detected by the weft yarn sensor 15 located downstream of the weft insertion and the signal waveform S3 is detected by the weft yarn sensor 15 located upstream of the weft insertion. The signal waveforms S1 and S3 are monitored during the weaving operation.

The signal waveform S1 detected by the weft yarn sensor 15 located downstream of the weft insertion has the amplitude that is smaller than the threshold value X and the cycle T1. Then, the controller 30 determines that the signal waveform S1 is a normal waveform. The signal waveform S3 detected by the weft yarn sensor 15 located upstream of the weft insertion has the amplitude that is greater than the threshold value X and the cycle T3. The cycle T3 is the half of the cycle T1. Then, the controller 30 determines that the signal waveform S3 is an abnormal waveform and controls the display device 42 to display a warning.

Since the cycle T3 of the signal waveform S3 is the half of the cycle T1 of the signal waveform S1 that is a normal waveform, the controller 30 can determine that the reed vibration of the signal waveform S3 does not depend on the rotational speed of the spindle 31. When the reed vibration does not depend on the rotational speed of the spindle 31, for example, the dents 46 may be removed from the lower support frame 44 or the upper support frame 45. In the case, the controller 30 controls the display device 42 to display some warning information on occurrence of the reed vibration that does not depend on the rotational speed of the spindle 31.

In the present embodiment, the controller 30 can store the history data about the cycle of the signal waveform S1 contained in the detected signal V2 during the weaving operation. When the cycle of the signal waveform S1 changes significantly from a stable state to an unstable state and does not return to the stable state, the controller 30 can determine that the reed vibration is abnormal by the history data about the cycle of the signal waveform S1 without comparison of the signal waveforms S3 by the plurality of weft yarn sensors 15.

In the present embodiment, the controller 30 can determine the amplitude of the reed vibration based on the amplitude of the detected signal V2 during the period when no weft yarn Y is present in the weft passage 48 and can also determine the amplitude of the reed vibration by determining the cycle of the detected signal V2 during the period when no weft yarn Y is present in the weft passage 48. The controller 30 can determine that the amplitude and the cycle of the detected signal V2 during the period when no weft yarn Y is present in the weft passage 48 are abnormal, so that the reed vibration does not depend on the rotational speed of the spindle 31.

The above embodiments may be modified in various ways as exemplified below.

Although in the above embodiments, the controller determines the amplitude of the reed vibration within the weaving width based on the amplitude of the signal waveform contained in the detected signal during the period when no weft yarn is present in the weft passage and controls the display device to display the amplitude of the reed vibration, the display device may not display the amplitude of the reed vibration.

Although in the above embodiments, when the amplitude of the signal waveform contained in the detected signal during the period when no weft yarn is present in the weft passage surpasses the threshold value, the controller performs a warning operation, the controller may perform no warning operation when the amplitude of the signal waveform contained in the detected signal during the period when no weft yarn is present in the weft passage surpasses the threshold value.

Although in the above embodiments, the two weft yarn sensors are provided within the weaving width, the number of the weft yarn sensors is not limited to two. The number of the weft yarn sensors provided within the weaving width may be one or three or more. Although the weft yarn sensors are provided within the weaving width, weft yarn sensors may be provided outside the weaving width.

Although in the above embodiments, the position of the weft yarn sensor provided within the weaving width is specified, the position of the weft yarn sensor provided within the weaving width may not be limited. Although in the above embodiments, the weft yarn sensor provided within the weaving width is located between the leading end position of the weft yarn that the leading end of the weft yarn reaches after the air injection ends and the leading end position that the leading end of the weft yarn reaches during a brake timing, the weft yarn sensor may be disposed within the weaving width regardless of the leading end position that the leading end of the weft yarn reaches during a brake timing.

Although in the first embodiment, the controller determines the amplitude of the reed vibration based on the maximum amplitude of the detected signal during the period when no weft yarn is present in the weft passage, for example, the controller may determine the amplitude of the reed vibration based on the minimum amplitude of the detected signal during the period when no weft yarn is present in the weft passage.

Although in the second embodiment, the controller determines the abnormal cause of the reed vibration by comparison of the cycles of the detected signals detected by the two weft yarn sensors during the period when no weft yarn is present in the weft passage, the controller may determine the abnormal cause of the reed vibration by three or more of the weft yarn sensors.

Although in the first and second embodiments, the weft yarn sensor 15 is used as a reflection optical sensor for determining the amplitude of the reed vibration, another reflection optical sensor for determining the amplitude of the reed vibration may be provided in addition to the weft yarn sensor 15.

A method of determining amplitude of reed vibration for an air jet loom (10), wherein the air jet loom (10) determines the amplitude of the reed vibration that is vibration of a reed (14) based on detected signals (V1, V2, V3, V4) detected by a sensor (15) for determining the amplitude of the reed vibration, is characterized by disposing the sensor (15) within a weaving width (B) in a direction of weft insertion, wherein the sensor (15) is a reflection optical sensor (15) that is insertable into a shed between warp yarns (T) and retractable from the shed and determining the amplitude of the reed vibration within the weaving width (B) based on amplitude of a signal waveform (S1, S2) contained in the detected signal (V2) detected during a period when no weft yarn (Y) is present in a weft passage (48) among the detected signals (V1, V2, V3, V4) detected by the sensor (15).

## Claims

1. A method of determining amplitude of reed vibration for an air jet loom (10), wherein the air jet loom (10) determines the amplitude of the reed vibration that is vibration of a reed (14) of the air jet loom (10) based on detected signals (V1, V2, V3, V4) detected by a sensor (15) for determining the amplitude of the reed vibration, wherein the sensor (15) for determining the amplitude of the reed vibration is a reflection optical sensor (15) and wherein the amplitude of the reed vibration is determined based on amplitude of a signal waveform (S1, S2) contained in a detected signal (V2) detected during a period when no weft yarn (Y) is present in a weft passage (48) among the detected signals (V1, V2, V3, V4) detected by the sensor (15) for determining the amplitude of the reed vibration, **characterized in that** the amplitude of the reed vibration is determined within a weaving width in a direction of weft insertion by disposing the sensor (15) for determining the amplitude of the reed vibration within the weaving width such that the sensor (15) is insertable into a shed between warp yarns (T) and retractable from the shed between the warp yarns (T).

2. The method of determining the amplitude of the reed vibration for the air jet loom (10), according to claim 1, **characterized in that** the sensor (15) for determining the amplitude of the reed vibration is a weft yarn sensor (15) for detecting the weft yarn (Y) flying through the weft passage (48).

3. The method of determining the amplitude of the reed vibration for the air jet loom (10), according to claim 1 or 2, **characterized by** displaying the amplitude of the reed vibration determined within the weaving width (B).

4. The method of determining the amplitude of the reed vibration for the air jet loom (10), according to anyone of claims 1 through 3, **characterized by** performing a warning operation when the amplitude of the reed vibration determined within the weaving width (B) surpasses a predetermined threshold value (X).

5. The method of determining the amplitude of the reed vibration for the air jet loom (10), according to any one of claims 1 through 4, **characterized by** determining a cycle (T1, T3) of the signal waveform (S1, S3) contained in the detected signal (V2) detected during the period when no weft yarn (Y) is present in the weft passage (48).

## Patentansprüche

1. Verfahren zum Bestimmen einer Amplitude einer Webblattschwingung für einen Luftstrahlwebstuhl (10), wobei der Luftstrahlwebstuhl (10) die Amplitude der Webblattschwingung bestimmt, die eine Schwingung eines Webblattes (14) des Luftstrahlwebstuhls (10) ist, auf der Grundlage von erfassten Signalen (V1, V2, V3, V4), die von einem Sensor (15) zum Bestimmen der Amplitude der Webblattschwingung erfasst werden,
wobei der Sensor (15) zum Bestimmen der Amplitude der Webblattschwingung ein optischer Reflexionssensor (15) ist, und
wobei die Amplitude der Webblattschwingung auf der Grundlage einer Amplitude einer Signalwellenform (S1, S2) bestimmt wird, die in einem erfassten Signal (V2) enthalten ist, das während eines Zeitraums erfasst wurde, wenn kein Schussfaden (Y) in einem Schussdurchgang (48) zwischen den von dem Sensor (15) zum Bestimmen der Amplitude der Webblattschwingung erfassten Signalen (V1, V2, V3, V4) vorhanden ist,
**dadurch gekennzeichnet, dass**
die Amplitude der Webblattschwingung innerhalb einer Webbreite in einer Richtung einer Schusseinführung bestimmt wird, durch Anordnen des Sensors (15) zum Bestimmen der Amplitude der Webblattschwingung innerhalb der Webbreite, so dass der Sensor (15) in ein Webfach zwischen Kettfäden (T) einführbar ist und von dem Webfach zwischen den Kettfäden (T) einziehbar ist.

2. Verfahren zum Bestimmen der Amplitude der Webblattschwingung für den Luftstrahlwebstuhl (10) nach Anspruch 1, **dadurch gekennzeichnet, dass** der Sensor (15) zum Bestimmen der Amplitude der Webblattschwingung ein Schussfadensensor (15) zum Erfassen des Schussfadens (Y) ist, der durch den Schussdurchgang (48) fliegt.

3. Verfahren zum Bestimmen der Amplitude der Webblattschwingung für den Luftstrahlwebstuhl (10) nach Anspruch 1 oder 2, **gekennzeichnet durch** Anzeigen der Amplitude der Webblattschwingung, die innerhalb der Webbreite (B) bestimmt wurde.

4. Verfahren zum Bestimmen der Amplitude der Webblattschwingung für den Luftstrahlwebstuhl (10) nach einem der Ansprüche 1 bis 3, **gekennzeichnet durch** Ausführen einer Warnoperation, wenn die Amplitude der Webblattschwingung, die innerhalb der Webbreite (B) bestimmt wird, einen vorbestimmten Grenzwert (X) überschreitet.

5. Verfahren zum Bestimmen der Amplitude der Webblattschwingung für den Luftstrahlwebstuhl (10) nach einem der Ansprüche 1 bis 4, **gekennzeichnet durch** Bestimmen eines Zyklus (T1, T3) der Signalwellenform (S1, S3), die in dem erfassten Signal (V2) enthalten ist, das während des Zeitraums erfasst wird, wenn kein Schussfaden (Y) in dem Schussdurchgang (48) vorhanden ist.

## Revendications

1. Procédé de détermination de l'amplitude d'une vibration de peigne pour un métier à jet d'air (10), dans lequel le métier à jet d'air (10) détermine l'amplitude de la vibration de peigne qui est la vibration d'un peigne (14) du métier à jet d'air (10) sur la base de signaux détectés (V1, V2, V3, V4) détectés par un capteur (15) pour déterminer l'amplitude de la vibration de peigne,
dans lequel le capteur (15) pour déterminer l'amplitude de la vibration de peigne est un capteur (15) optique à réflexion et
dans lequel l'amplitude de la vibration de peigne est déterminée sur la base d'une amplitude d'une forme d'onde de signal (S1, S2) contenue dans un signal détecté (V2), détecté pendant une période où aucun fil de trame (Y) n'est présent dans un passage de trame (48) parmi les signaux détectés (V1, V2, V3, V4), détectés par le capteur (15) pour déterminer l'amplitude de la vibration de peigne, **caractérisé en ce que** l'amplitude de la vibration de peigne est déterminée au sein d'une largeur de tissage dans une direction d'insertion de trame en disposant le capteur (15) pour déterminer l'amplitude de la vibration de peigne à l'intérieur de la largeur de tissage, de sorte que le capteur (15) puisse être inséré dans une foule entre les fils de chaîne (T) et se rétracter de la foule entre les fils de chaîne (T).

2. Procédé de détermination de l'amplitude de la vibration de peigne pour le métier à jet d'air (10), selon la revendication 1, **caractérisé en ce que** le capteur (15) pour déterminer l'amplitude de la vibration de peigne est un capteur de fil de trame (15) pour détecter le fil de trame (Y) passant à travers le passage de trame (48).

3. Procédé de détermination de l'amplitude de la vibration de peigne pour le métier à jet d'air (10), selon la revendication 1 ou 2, **caractérisé par** l'affichage de l'amplitude de la vibration de peigne déterminée à l'intérieur de la largeur de tissage (B).

4. Procédé de détermination de l'amplitude de la vibration de peigne pour le métier à jet d'air (10) selon l'une quelconque des revendications 1 à 3, **caractérisé par** la réalisation d'une opération d'avertissement lorsque l'amplitude de la vibration de peigne déterminée au sein de la largeur de tissage (B) dépasse une valeur seuil (X) prédéterminée.

5. Procédé de détermination de l'amplitude de la vibration de peigne pour le métier à jet d'air (10), selon l'une quelconque des revendications 1 à travers 4, **caractérisé par** la détermination d'un cycle (T1, T3) de la forme d'onde de signal (S1, S3) contenue dans le signal détecté (V2), détecté pendant la période où aucun fil de trame (Y) n'est présent dans le passage de trame (48) .
